Europäisches Patentamt

European Patent Office

Office européen des brevets

(11) Numéro de publication: **0 364 314 B1**

## (12) FASCICULE DE BREVET EUROPEEN

(45) Date de publication de fascicule du brevet: **30.03.94**   (51) Int. Cl.5: **H04N 3/15**

(21) Numéro de dépôt: **89402483.5**

(22) Date de dépôt: **12.09.89**

(54) **Procédé de lecture de cellules photosensibles du type comportant deux diodes montées en série avec des sens de conduction opposés.**

(30) Priorité: **16.09.88 FR 8812126**

(43) Date de publication de la demande:
**18.04.90 Bulletin 90/16**

(45) Mention de la délivrance du brevet:
**30.03.94 Bulletin 94/13**

(84) Etats contractants désignés:
**DE FR GB NL**

(56) Documents cités:
**EP-A- 0 245 147**
**FR-A- 2 605 166**

(73) Titulaire: **THOMSON-CSF**
**173, Boulevard Haussmann**
**F-75008 Paris(FR)**

(72) Inventeur: **Arques, Marc**
**THOMSON-CSF**
**SCPI**
**Cédex 67**
**F-92045 Paris la Défense(FR)**
Inventeur: **Guyot, Lucien**
**THOMSON-CSF**
**SCPI**
**Cédex 67**
**F-92045 Paris la Défense(FR)**

(74) Mandataire: **Guérin, Michel et al**
**THOMSON-CSF**
**SCPI**
**B.P. 329**
**50, rue Jean-Pierre Timbaud**
**F-92402 Courbevoie Cédex (FR)**

EP 0 364 314 B1

## Description

L'invention se rapporte au domaine de la lecture de cellules photosensibles, notamment du type à l'état solide, et où chaque cellule comporte deux diodes montées en série et montées tête-bêche, c'est-à-dire avec des sens de conduction opposés, au moins une de ces deux diodes étant une photodiode. Le procédé de l'invention a particulièrement pour objet d'augmenter la vitesse de lecture tout en conservant à cette lecture la précision et la qualité requises, particulièrement dans le cas où la cellule photosensible a été exposée à un signal utile de faible intensité.

Il est courant par exemple d'utiliser des cellules photosensibles dans des dispositifs photosensibles à l'état solide dans lesquels les cellules photosensibles sont disposées selon un arrangement matriciel et constituent une matrice photosensible. Une matrice photosensible comporte un réseau de conducteurs en ligne et un réseau de conducteurs en colonne. A chaque croisement d'un conducteur ligne et d'un conducteur colonne, est disposé un montage photosensible ou cellule photosensible appelé point photosensible dans la suite de la description ; les points photosensibles sont ainsi organisés également en lignes et en colonnes. Chaque point photosensible est connecté entre un conducteur ligne et un conducteur colonne : en fait à chaque conducteur ligne sont connectés autant de points photosensibles qu'il y a de colonnes de ces derniers, et à chaque conducteur en colonne sont connectés autant de points photosensibles qu'il y a de lignes do ces derniers.

Le nombre de points photosensibles dans une surface donnée, détermine la résolution de l'image. Il est connu de réaliser des matrices d'éléments photosensibles de grande capacité, par exemple 2000 x 2000 points photosensibles, pour obtenir une image dont les dimensions sont de l'ordre de 40 cm x 40 cm. Dans ce cas, chaque point photosensible est situé dans une zone de surface élémentaire dont les dimensions maximum sont de 200 micromètres x 200 micromètres. Une telle disposition permet de constituer des détecteurs de type surfacique qui peuvent s'appliquer notamment à la radiologie, à condition d'ajouter un scintillateur, à la détection des particules (électrons, neutrons, et...) et à la reprographie.

Chaque point photosensible comporte un élément photosensible tel que photodiode, phototransistor, sensible aux photons lumineux visibles ou proches du visible. Ces photons lumineux sont convertis en charge électrique, et cette charge électrique est accumulée dans une capacité électrique formant une capacité de stockage, qui peut être constituée par la capacité de l'élément photosensible lui-même. Un dispositif de lecture permet d'interroger l'état électrique de la capacité de stockage, et de convoyer la charge électrique qui constitue le signal vers un amplificateur de signal.

L'un des principaux problèmes que pose la lecture des points photosensibles, réside dans une trop forte valeur de la capacité électrique présentée par les cellules photosensibles. L'influence de cette capacité s'exerce particulièrement lors de la lecture des points photosensibles, c'est-à-dire lors de l'amplification de la photocharge développée par un élément photosensible, une photodiode par exemple suite à son éclairement. Cette capacité de chaque élément photosensible est appliquée aux conducteurs colonnes et à l'amplificateur de lecture auquel cet élément est relié, et tend à détériorer le rapport signal/bruit.

Il est à noter en outre qu'il est souhaitable d'éviter de rapporter sur un conducteur colonne et l'amplificateur de lecture correspondant la capacité présentée par les éléments photosensibles reliés à des conducteurs lignes autres que le conducteur ligne qui est adressé à un instant donné, c'est-à-dire qu'il est souhaitable de réaliser un bon découplage par rapport au conducteur colonne, des points photosensibles non adressés. Ceci nécessite que chaque cellule photosensible comporte un élément faisant office d'interrupteur tenu à l'état ouvert, sauf dans la phase de lecture de la cellule photosensible auquel il appartient. En vue de simplifier la fabrication des matrices photosensibles à l'état solide, il est connu d'utiliser pour remplir la fonction d'interrupteur ci-dessus mentionnée, une diode montée en série avec l'élément photosensible.

Une telle disposition est connue notamment par une demande de brevet français FR-A-2 605 166, déposée le 9 Octobre 1986 au nom de THOMSON-CSF, et qui se rapporte à un dispositif photosensible à l'état solide, son procédé de lecture et son procédé de fabrication. Cette demande de brevet décrit particulièrement un dispositif photosensible, qui peut être matriciel ou linéaire, et dans lequel chaque point photosensible est formé d'une cellule photosensible constituée par deux diodes montées en série et tête-bêche, c'est-à-dire avec des sens de conduction opposés ; une première diode étant reliée à un conducteur ligne et la seconde diode étant reliée à un conducteur colonne. Dans l'exemple décrit dans cette demande de brevet, la première diode a une capacité environ 10 fois plus faible que la capacité de la seconde diode. Il en résulte une diminution de la capacité équivalente ramenée sur un conducteur colonne par chaque cellule photosensible reliée à ce conducteur colonne. D'autre part, le procédé de lecture utilisé est tel que la première diode fonctionne comme un interrupteur qui est mis à l'état fermé uniquement durant la phase de lecture des cellules reliées au conducteur ligne auquel il appartient ; il en résulte un bon découplage des conducteurs colonnes par rapport aux cellules photosensibles des lignes non adressées.

Cependant, une cellule photosensible formée d'un montage de deux diodes en série, tête-bêche, et dont le fonctionnement est obtenu par un procédé de lecture classique tel que décrit dans le document ci-dessus mentionné comporte certains inconvénients importants, et particulièrement l'inconvénient d'introduire une erreur qui peut être considérable sur la lecture des charges engendrées au niveau d'un point photosensible lors de l'exposition de ce dernier à un signal de lumière à capter ; ce défaut étant d'autant plus prononcé que le signal est faible et que l'on cherche à obtenir une vitesse de lecture élevée.

Le procédé de l'invention permet d'éviter ces inconvénients et s'applique à la lecture de points ou cellules photosensibles comprenant deux diodes montées en série tête-bêche comme il a été ci-dessus expliqué.

Selon l'invention, un procédé de lecture d'au moins un point photosensible comportant une première et une seconde diode montées en série avec des sens de conduction opposés, au moins une des diodes étant photosensible, ledit procédé consistant à polariser les deux diodes en inverse pendant l'exposition du point photosensible à un signal utile, de sorte à accumuler une quantité de charges signal en une zone à potentiel flottant située à la liaison des deux diodes, puis à polariser en direct la première diode pendant des phases de lecture par des impulsions de lecture périodiques, ledit procédé étant caractérisé en ce qu'il consiste en outre à éclairer le point photosensible par un éclairement additionnel pour engendrer dans la zone à potentiel flottant des charges d'entraînement qui s'ajoutent au moins partiellement à la charge signal, afin de réduire la résistance dynamique présentée apr la première diode quand elle est polarisée en direct.

L'invention sera mieux comprise à l'aide de la description qui suit, faite à titre d'exemple non limitatif, et aux cinq figures annexées parmi lesquelles :
- la figure 1 montre schématiquement une matrice de points photosensibles du type auquel peut être appliqué le procédé de l'invention ;
- les figures 2a à 2d sont des diagrammes de signaux explicatifs d'un procédé de lecture classique des points photosensibles montrés à la figue 1 ;
- la figure 3 est une courbe qui permet d'illustrer à la fois les erreurs de lecture dans le cas d'un procédé de lecture classique, et les avantages apportés par le procédé de lecture conforme à l'invention ;
- les figures 4a à 4e sont des diagrammes de signaux explicatifs du procédé de lecture selon l'invention, suivant une première variante de ce dernier ;
- les figures 5a à 5e sont des diagrammes de signaux explicatifs du procédé de lecture selon l'invention, suivant une seconde variante.

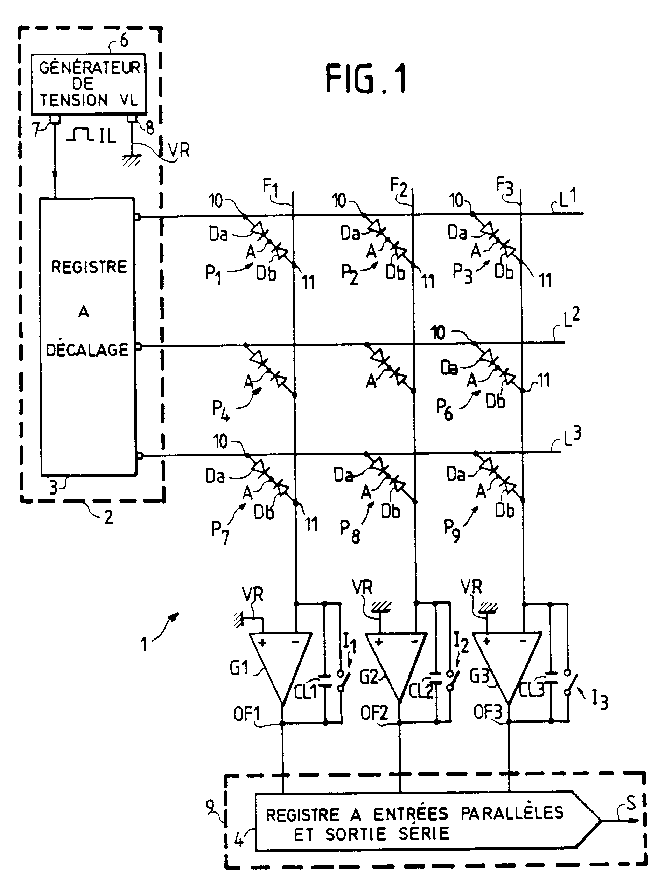

La figure 1 montre à titre d'exemple non limitatif, le schéma électrique d'une matrice photosensible 1 ; ce schéma électrique étant en lui-même classique : en effet la matrice comprend une pluralité de points photosensibles P1 à P9 constitués chacun par des cellules photosensibles telles que décrites dans la demande de brevet français FR-A-2605166 précédemment citée, c'est-à-dire que chaque point photosensible P1, P9 ou cellule est formé par deux diodes Da, Db montées en séries, et tête-bêche, c'est-à-dire avec des sens de conduction opposes.

Dans l'exemple non limitatif décrit, le nombre de points photosensibles P1 à P9 est limité à 9, selon un assemblage matriciel 3 x 3 pour simplifier la figure 1, mais dans l'esprit de l'invention cet assemblage matriciel peut avoir une capacité beaucoup plus grande, de plusieurs millions de points par exemple.

La matrice 1 comporte des conducteurs en ligne L1 à L3 et des conducteurs en colonne F1 à F3, le nombre de chaque type de ces conducteurs étant limité à trois, compte-tenu de l'exemple de la figure où seulement 9 points photosensibles P1 à P9 sont représentés.

En pratique et d'une manière en elle-même classique, les points photosensibles P1 à P9 sont formés chacun à l'intersection d'un conducteur en ligne L1 à L3 et d'un conducteur en colonne F1 à F3. Chaque point photosensible P1 à P9 comporte une première extrémité 10 connectée à un conducteur en ligne L1 à L3, et comporte une seconde extrémité 11 connectée à un conducteur colonne F1 à F3. Dans l'exemple non limitatif décrit, pour chaque point photosensible P1 à P9, la première diode Da est reliée à un conducteur ligne L1 à L3 par son anode qui forme la première extrémité 10, et la seconde diode Db est reliée à un conducteur colonne F1 à F3 également par son anode qui forme la seconde extrémité 11.

Chacune des diodes Da, Db constitue de manière connue, une capacité Ca, Cb quand cette diode est polarisée en inverse ; et dans le cas des points photosensibles P1 à P9, la capacité Cb des secondes diodes Db est environ 10 fois plus grande que la capacité Ca des premières diodes Da ; les premières diodes Da devant remplir principalement une fonction d'interrupteur comme enseigné par la demande de brevet déjà mentionnée.

3

Les conducteurs en ligne L1 à L3 sont reliés à un dispositif d'adressage ligne 2 comportant notamment un registre à décalage logique 3 qui permet d'assurer l'adressage séquentiel de chaque ligne L1 à L3 en vue de la lecture des points photosensibles P1 à P9 qui sont reliés à cette ligne. Le registre 3 permet d'appliquer une tension VL sous forme d'impulsion appelée impulsion de lecture IL, de conducteur ligne en conducteur ligne, alors que les autres conducteurs lignes non adressés sont maintenus à un potentiel de référence VR. Les impulsions de tension de lecture IL sont fournies par un générateur d'impulsions de tension 6 dont une sortie 7 est à cet effet reliée au registre à décalage 3, et dont une autre sortie 8 est reliée à la tension de référence VR qui est la masse dans l'exemple non limitatif décrit. Les impulsions de lecture IL permettent la lecture des points photosensibles P1 à P9, c'est-à-dire de transférer sur les conducteurs colonnes des charges engendrées par un signal d'éclairement ou signal utile (non représenté) auquel peut être exposé chaque point photosensible : ces charges, qui sont proportionnelles à l'intensité de l'éclairement, sont stockées dans une zone constituée à la liaison entre les deux diodes Da et Db de chaque point photosensible P1 à P9, cette zone ou liaison entre ces deux diodes étant symbolisée sur la figure par un point repéré A et constitue un point à potentiel flottant, car son potentiel varie avec la quantité de charges qui s'y accumulent ; cette quantité de charge pouvant être engendrée par l'une ou l'autre des deux diodes Da, Db ou par ces deux diodes selon qu'elles sont l'une et/ou l'autre photosensibles. Mais de préférence c'est la seconde diode Db, qui présente la plus forte capacité, qui doit être photosensible, alors que la première diode Da dont la fonction principale est celle d'un interrupteur peut éventuellement ne pas être photosensible.

D'autre part, chaque conducteur colonne F1 à F3 est relié à l'entrée négative "-" d'un amplificateur opérationnel G1 à G3, monté en intégrateur à l'aide d'un condensateur d'intégration CL1 à CL3. Chaque condensateur d'intégration est monté entre l'entrée négative "-" de l'amplificateur G1 à G3 et la sortie OF1, OF2, OF3 de ce dernier. La seconde entrée ou entrée positive "+" de chaque amplificateur G1 à G3 est reliée à un potentiel de référence colonne qui impose à chaque conducteur colonne F1 à F3 ce potentiel de référence. Ce potentiel peut être ou non le même potentiel VR que celui du dispositif d'adressage ligne. Dans ce qui suit on considérera, pour simplifier, que le potentiel de référence est le même pour les lignes et les colonnes.

Chaque amplificateur intégré G1, G3 comporte un interrupteur de remise à zéro I1 à I3 monté en parallèle avec le condensateur d'intégration CL1 à CL3 ; sur la figure 1 des interrupteurs I1 à I3 sont représentés selon des interrupteurs, mais ils peuvent bien entendu être constitués de manière classique par des transistors, de type MOS par exemple, commandés par des signaux de remise à zéro (non représentés).

Les sorties OF1 à OF3 d'amplificateur G1 à G3 sont reliées à des moyens de lecture et de multiplexage 9, comportant par exemple un dispositif d'acquisition de données analogiques 4 formé par un registre à décalage à entrée parallèle et sortie S série, du type C.C.D. par exemple (du terme anglais "Charge Coupled Device"). Le dispositif d'acquisition de données analogiques 9 peut ainsi sortir en série, de manière classique, des signaux (non représentés) qui correspondent aux charges qui ont été intégrées par les amplificateurs G1 à G3 et en phase de lecture de tous les points photosensibles reliés à un même conducteur ligne L1 à L3.

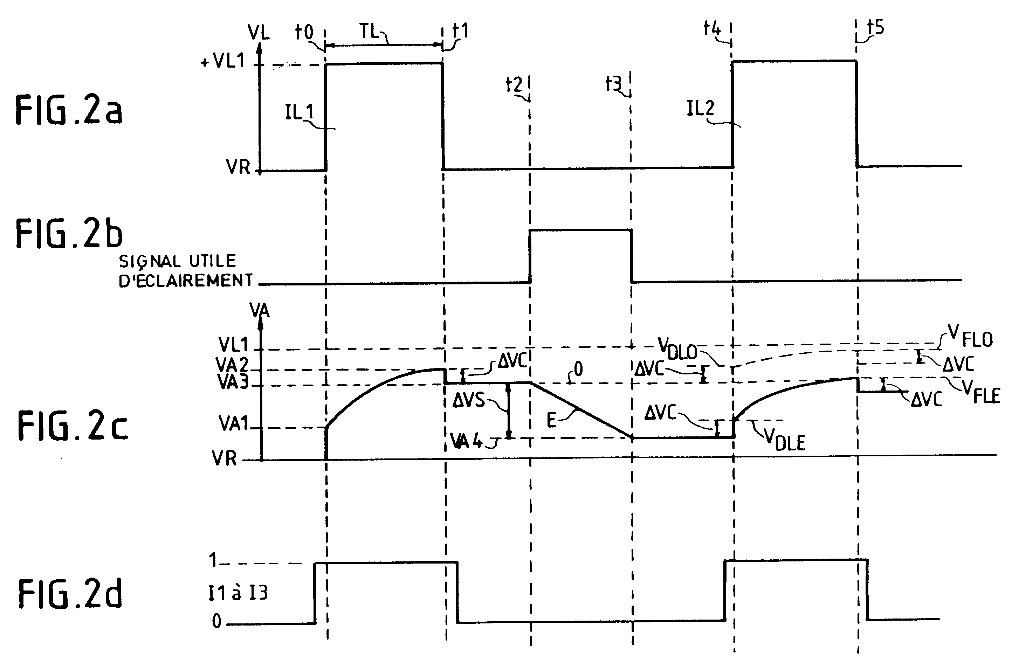

Les figures 2a à 2e illustrent le fonctionnement d'un point photosensible P1 à P9 quelconque de la matrice 1 montrée à la figure 1, le premier point photosensible P1 par exemple, dans le cas où son fonctionnement est obtenu par un procédé de lecture de l'art antérieur.

La figure 2a montre que chaque point photosensible, c'est-à-dire le premier point photosensible P1 dans l'exemple, reçoit périodiquement des impulsions de lecture IL1, IL2, constituées par des impulsions de tensions Vl, et ayant une amplitude VL1 positive par rapport au potentiel de référence VR qui est appliqué aux électrodes lignes L1 à L3 en absence des impulsions de lectures IL1, IL2.

La figure 2b montre que le point photosensible, entre deux impulsions de lecture, reçoit un éclairement signal qui peut être continu, ou bien pulsé comme montré sur la figure 2b.

La figure 2c montre les modifications du potentiel Va au point A dues à l'application des impulsions de lecture et à l'application d'un signal d'éclairement. La figure 2d permet de situer les périodes durant lesquelles les interrupteurs de remise à zéro I1 à I3 passent de l'état fermé (0) à l'état ouvert (1) de sorte à permettre l'intégration (à l'état ouvert) par les amplificateurs G1 à G3 des charges qui sont lues à l'aide des impulsions de lecture. Les créneaux d'ouverture des interrupteurs ne sont toutefois représentés que pendant les intervalles de temps concernant la ligne en cours de lecture.

A l'instant t0 : on voit à la figure 2a, que débute une première impulsion de lecture IL1 ayant une durée TL comprise entre l'instant t0 et un instant t1. A l'instant t0, avec le front de montée de l'impulsion de lecture IL1, on trouve une augmentation de la tension VA au point A, laquelle passe par exemple, si l'instant t0 est le début du fonctionnement, de la tension de référence VR à une tension VA1 à partir de laquelle la première diode Da commence à être polarisée en direct et tend vers la valeur VL1, selon une courbe quasi exponentielle du fait notamment que la seconde diode Db est polarisée en inverse et constitue une capacité Cb.

A l'instant t1 : l'impulsion de lecture IL1 revient à zéro, c'est-à-dire à la valeur de la tension de référence VR, alors que la tension Va au point A a atteint une valeur VA2 inférieure à la valeur VL1 de l'impulsion de lecture IL1 ; la seconde diode Db étant chargée à la valeur VA2, la première diode Da (la plus petite des deux diodes) se bloque c'est-à-dire qu'elle passe en polarisation inverse, et la tension VA au point A décroît par division capacitive jusqu'à une valeur VA3 et accuse une variation - ΔVC telle que :

$$- \Delta VC = - VL1 . \frac{Ca}{Ca+Cb}$$

où Ca et Cb sont respectivement des capacités des première et seconde diodes Da et Db quand ces dernières sont polarisées en inverse ; et où VL1 est l'amplitude de l'impulsion de tension de lecture VL.

A un instant t2, débute une phase d'éclairement dans laquelle le point photosensible peut être exposé à un signal de lumière à capter. Il est à noter qu'entre l'instant t1 et l'instant t2 la tension VA au point A peut décroître très légèrement à cause des courants d'obscurité des première et seconde diodes Da et Db, mais nous avons négligé de représenter l'effet de ces courants d'obscurité pour simplifier la description.

La phase d'éclairement par un signal utile à capter est comprise entre l'instant t2 et l'instant t3, et cet éclairement peut être maximum, ou être nul au point que le point photosensible P1 reste dans l'obscurité. Nous avons représenté avec une courbe en trait plein repérée E un cas avec éclairement et, avec une courbe en tiretés repérée O l'éclairement nul ou obscurité. L'éclairement signal crée une chute de tension ΔVS de la tension VA au point A. Cette variation de tension ΔVS est liée à la charge accumulée au point A sous l'effet de l'éclairement signal par la relation suivante :

$$\Delta VS = \frac{QS}{Ca+Cb}$$

où QS est la charge signal engendrée par l'une ou l'autre ou les deux diodes Da et Db. Une valeur VA4 de la tension VA due à la variation de tension signal ΔVS est atteinte à l'instant t3 qui marque la fin de la période d'exposition. Si l'on néglige les courants d'obscurité précédemment mentionnés, la valeur VA4 de la tension VA est conservée jusqu'à un instant t4 où débute une seconde impulsion de lecture IL2 ayant une même amplitude VL1 que la première impulsion de lecture IL1. Il est à noter que durant le temps TL des impulsions de lecture IL1, IL2, l'interrupteur de remise à zéro lecture IL1 à IL3 est ouvert, de sorte à permettre l'intégration des charges accumulées au point A, et qui vont être transférées vers l'électrode colonne et l'amplificateur intégrateur correspondant par l'impulsion de lecture qui suit une exposition à la lumière.

A l'instant t4 : en même temps que débute la seconde impulsion de lecture IL2, la tension VA est alors égale à la tension VA4 et elle est augmentée d'une valeur correspondant à Δ VC, c'est-à-dire à la tension VL1 que multiplie le rapport

$$\frac{Ca}{Ca+Cb}$$

c'est-à-dire d'une même quantité qu'à l'instant t1 mais avec un signe contraire. Quand la variation ΔVC est effectuée, la tension VA a une valeur $V_{DLE}$ qui correspond à la valeur en début de lecture après éclairement ; ensuite la tension VA augmente et tend vers la valeur VL1 jusqu'à un instant t5 qui marque la fin de la seconde impulsion de lecture IL2.

A l'instant t5, la tension VA a atteint une valeur $V_{FLE}$ qui correspond à la valeur en fin de lecture après éclairement, et qui est inférieure à la valeur VL1 de l'impulsion de lecture IL2. Avec la fin de cette impulsion de lecture, la tension VA accuse une variation - ΔVC semblable à celle de l'instant t1.

Si l'on observe maintenant la courbe O en tiretés, qui représente le cas où le point photosensible P1 est resté dans l'obscurité : la valeur VA3 que comportait la tension VA à l'instant t2 est conservée jusqu 'à l'instant t4. A l'instant t4 (qui correspond au début de la seconde impulsion de lecture IL2) la tension VA augmente de + ΔVC pour atteindre une valeur $V_{DLO}$ correspondant à la valeur en début de lecture après obscurité ; puis jusqu'à l'instant t5, la tension VA augmente et tend vers la valeur VL1 pour atteindre, à l'instant t5, une valeur $V_{FLO}$ qui est la valeur en fin de lecture après obscurité ; cette dernière valeur $V_{FLO}$ étant supérieure à la valeur en fin de lecture après éclairement $V_{FLE}$ et inférieure à la valeur VL1 de l'impulsion de lecture IL2.

Il est clair sur la figure 2 que la tension VA a une valeur $V_{FLO}$ en fin de lecture après obscurité, qui est supérieure à la valeur $V_{FLE}$ en fin de lecture après éclairement, ce qui révèle qu'une certaine quantité de la charge signal QS n'a pas été transférée c'est-à-dire lue. Entre l'instant t4 et l'instant t5, l'augmentation de la tension VA dans le cas de l'obscurité, entre la tension $V_{DLO}$ et $V_{FLO}$ correspond à une charge d'obscurité Q obscurité alors que dans le même temps l'augmentation de la tension VA dans le cas de l'éclairement correspond à une charge Q éclairement : la quantité de charges lue QL entre l'instant t4 et l'instant t5 vaut :

QL = Q éclairement - Q obscurité,
QL = Cb.($V_{FLE}$ - $V_{DLE}$) - Cb.($V_{FLO}$ - $V_{DLO}$),
QL = Cb. ($V_{DLE}$ - $V_{DLO}$) - Cb.($V_{FLE}$ - $V_{FLO}$),
QL = Cb. ΔVS - Cb. ($V_{FLE}$ - $V_{FLO}$).

Ceci est à comparer avec ce qui serait lu si la première diode Da était un interrupteur idéal en parallèle sur la capacité Ca : la quantité de charges Qli idéalement lue serait égale à Cb. ΔVS.

Il y a donc une charge non lue égale à Cb. ($V_{FLE}$ - $V_{FLO}$), d'où résulte une erreur de lecture et une réduction de la sensibilité du dispositif.

Pour que l'erreur de lecture soit minimum, il faudrait que la valeur de la tension VA au point A à la fin du temps de lecture TL soit indépendante de la valeur de la tension Va en début de l'impulsion de lecture c'est-à-dire du temps TL.

Il est bien sûr possible de réduire $V_{FLE}$ - $V_{FLO}$ en augmentant la durée TL, puisque la tension VA tend vers la valeur VL1 dans tous les cas (bien que la tension VA au point A ne puisse atteindre qu'une valeur un peu inférieure à celle de la valeur VL1 des impulsions de lecture, du fait de la tension de coude de la première diode Da). Cependant, dans la pratique, la durée TL du temps de lecture est imposée et doit être aussi courte que possible, et cette solution n'est donc pas applicable.

Un autre inconvénient de la lecture incomplète est que la charge non lue demeure au point A. Ceci entraîne qu'à chaque début de cycle (correspondant aux instants t1 et t5 sur la figure 2a, il y a une mémoire de ce qui s'est passé au cycle précédent ; il y a donc une rémanence du détecteur.

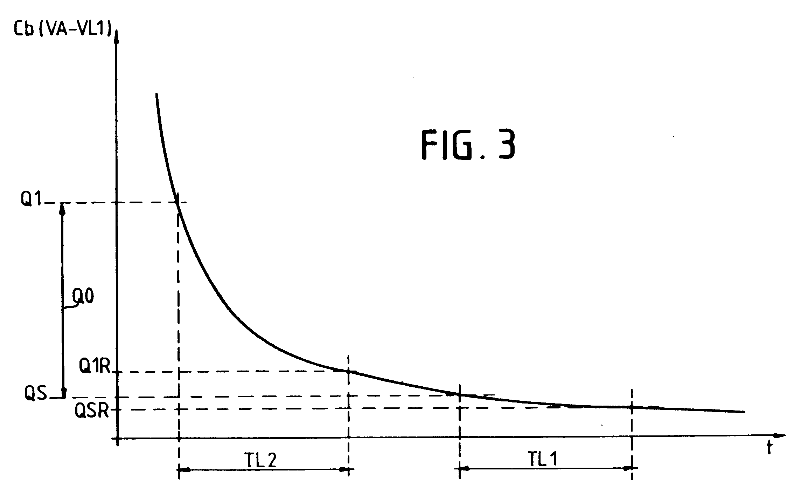

La figure 3 montre une courbe représentative de la quantité de charges restant à évacuer du point A, accumulée par la capacité Cb formée par la seconde diode Db, c'est-à-dire pour réinitialiser complètement le point A à la valeur VL1 (à la tension de coude près), soit la courbe Cb. (Va - VL1) = f (t). Cette courbe correspond à la décharge de la capacité Cb à travers la première diode Da quand celle-ci est polarisée en direct. Cette courbe a donc pour équation :

$$\frac{d\ Cb.\ (VA - VL1)}{Cb.\ (VA - VL1)} = -\frac{dt}{Rd_{Da}.Cb}$$

où $Rd_{Da}$ est la résistance dynamique de la première diode Da en direct. C'est donc une courbe de forme presque exponentielle (elle serait exponentielle si $Rd_{Da}$ était indépendant du temps).

Si l'on dispose d'un temps de lecture TL1 pour lire une charge signal QS, on voit qu'une charge résiduelle QSR peut être très importante par rapport à la charge signal QS ; et l'erreur de lecture

$$\varepsilon\ 0 = \frac{QSR}{QS}$$

est d'autant plus grande que la charge signal QS est faible.

La solution proposée par le procédé de l'invention consiste à ajouter à la charge signal QS, une charge Q0, dite charge d'entraînement de sorte à accumuler au point A une charge totale Q1 telle que Q1 = Q0 + QS.

Dans ces conditions, on observe sur la courbe de la figure 3, qu'au bout d'un temps de lecture TL2 de durée égale au temps de lecture TL1 précédemment examiné, la charge non lue de la charge totale Q1, c'est-à-dire une charge résiduelle Q1R est telle que dans ce cas l'erreur de lecture $\epsilon$ 1 est inférieure à l'erreur de lecture $\epsilon$ 0 du cas précédent, avec

$$\epsilon\, 1 \; = \; \frac{Q1R}{Q1}$$

ou

Q1R = $\epsilon$1.Q1,
Q1R = $\epsilon$1.(Q0 + QS),
Q1R = $\epsilon$1.QS + $\epsilon$1.Q0,
Q1R = $\epsilon$1.QS + constante

Nous voyons qu'il est ainsi possible de lire la charge signal QS à une constante près, avec une efficacité meilleure grâce à la charge d'entraînement Q0.

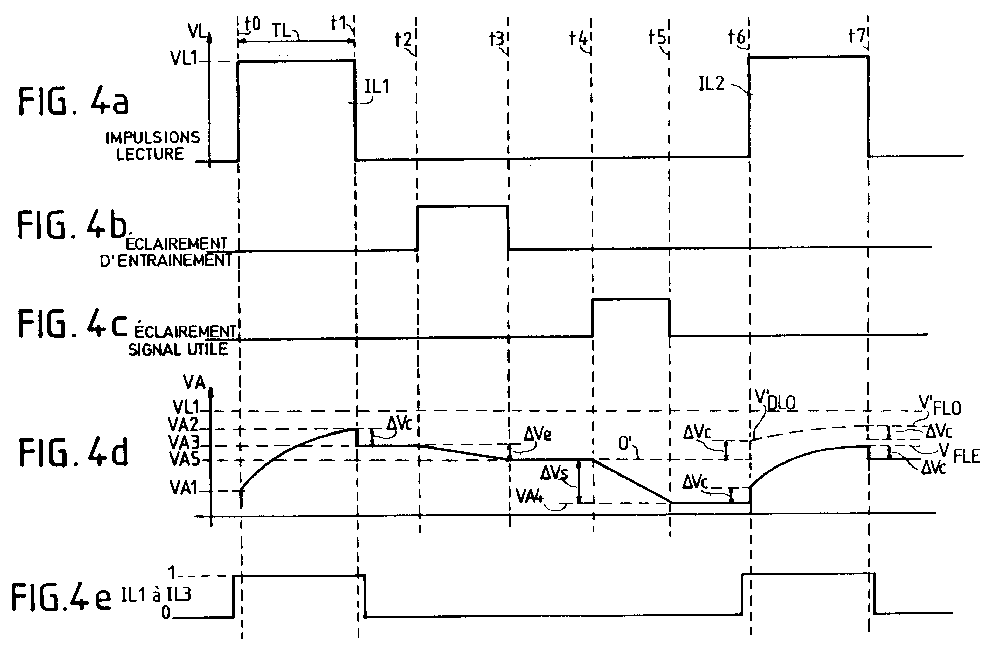

Selon une caractéristique du procédé de l'invention, la charge d'entraînement Q0 est ajoutée à l'aide d'un éclairement du point photosensible P1 à P9, qui peut être soit permanent, ou selon seulement une impulsion de lumière qui peut être par exemple, comme dans l'exemple non limitatif représenté à la figure 4b, produit entre la fin d'une impulsion de lecture IL et le début d'un éclairement signal.

Il est à noter que la structure matérielle d'une matrice photosensible telle que montrée à la figure 1, avec deux diodes Da et Db en série et tête-bêche par point photosensible P1 à P9, peut être réalisée de quelle que manière que ce soit, par exemple selon l'enseignement donné par la demande de brevet français FR-A-2605166 déja citée, et qui décrit un mode de réalisation dans lequel le substrat est en verre ou en quartz de sorte à être transparent à la lumière. La source de lumière (non représentée dans la présente description) utilisée à cet effet peut être plaquée contre ce substrat, et elle peut être constituée par des moyens en eux-mêmes connus, par exemple une lumiplaque, ou par un réseau de diodes électroluminescentes comme il est décrit par exemple dans une demande de brevet français FR-A-2598250. Il est bien entendu préférable que la source de lumière choisie permette une bonne reproductibilité de la quantité de charges d'entraînement Q0, d'un cycle d'image à l'autre, afin que cette quantité de charges puisse être considérée comme un simple seuil.

Les figures 4a à 4e illustrent un premier mode de réalisation du procédé de l'invention, dans laquelle la charge d'entraînement Q0 est constituée par une impulsion de lumière ou éclairement d'entraînement qui se situe entre la fin d'une impulsion de lecture IL et le début d'un éclairement signal par signal utile.

La figure 4a montre les impulsions de lecture IL qui portent la tension VL des conducteurs lignes à une valeur VL1 positive par rapport à la tension de référence VR ; la figure 4b permet de situer dans le temps la phase d'éclairement d'entraînement ; la figure 4c représente l'impulsion d'éclairement signal ; la figure 4d représente les valeurs de la tension Va au point A ; la figure 4e illustre l'état ouvert (1) ou fermé (0) des interrupteurs de remise à zéro IL1 à IL3 dont on peut remarquer dès maintenant qu'ils autorisent l'intégration, par les amplificateurs G1 à G3 des charges accumulées au point A pendant les impulsions de lecture IL1, IL2.

L'instant t1 correspond, comme dans l'exemple de la figure 3, au front descendant d'une impulsion de lecture IL1 qui a duré un temps TL depuis l'instant t0. L'établissement de la première impulsion de lecture IL1 à l'instant t0, a conduit la tension VA à atteindre, à l'instant t1, une valeur VA2 inférieure à la valeur VL1 ; et avec le front de descente de la première impulsion de lecture IL1, la tension VA décroît jusqu'à la valeur VA3 par suite d'une variation de tension - $\Delta$VC.

La tension VA conserve la valeur VA3 jusqu'à un instant t2 où débute un éclairement d'entraînement qui est appliqué jusqu'à un instant t3. Entre l'instant t2 et l'instant t3, sous l'effet des charges engendrées par l'éclairement d'entraînement, la tension VA décroît et passe de la valeur VA3 à une valeur VA5, soit une variation $\Delta$Ve qui correspond à la charge d'entraînement QO précédemment mentionnée. A partir de l'instant t3, la tension VA conserve sa valeur VA5 jusqu'à un instant t4 où débute l'éclairement signal, lequel éclairement signal dure jusqu'à un instant t5.

Sous l'effet de l'éclairement signal, une charge signal QS est engendrée au point A qui provoque une variation $\Delta$VS de la tension VA, cette variation $\Delta$VS étant dans le sens d'une diminution qui s'ajoute à la variation $\Delta$Ve (représentant la charge d'entraînement Q0) pour descendre la tension VA à la valeur VA4 par exemple. La valeur VA4 de la tension VA est conservée jusqu'à un instant t6 où débute une seconde

7

impulsion de lecture IL2. La tension VA accuse une augmentation ΔVc à partir de laquelle elle croît et tend vers la valeur VL1 de l'impulsion de lecture IL2 ; à l'instant t7 qui correspond à la fin de l'impulsion de lecture IL2, et au début d'un cycle suivant, la tension VA a atteint une valeur $V_{FLE}$ c'est-à-dire la valeur de fin de lecture d'éclairement et accuse une diminution correspondant à la variation ΔVc.

Si l'on observe à partir de l'instant t4, une courbe en tiretés repérée O′ et qui représente une absence d'éclairement signal c'est-à-dire l'obscurité, on remarque que la tension VA dans ce cas conserve la valeur VA5 jusqu'à l'instant t6 de début d'impulsion de lecture ; et la valeur VA passe alors à une valeur $V'_{DLO}$ par une variation ΔVc semblable à l'exemple de la figure 2, et croît ensuite pour tendre vers la valeur VL1 jusqu'à l'instant t7 de fin d'impulsion de lecture. A l'instant t7 de fin d'impulsion de lecture, la tension VA a une valeur de fin de lecture obscurité $V'_{FLO}$ inférieure à la valeur $V_{FLO}$ qu'elle comportait dans l'exemple de la figure 2, ceci du fait de la présence de la charge d'entraînement Q0 ; ce qui indique que l'erreur sur la lecture est plus faible que dans le cas de la figure 2 c'est-à-dire de l'art antérieur. Il est à remarquer que cette amélioration est liée au fait qu'à l'aide de la charge d'entraînement, on diminue la valeur de tension entre le potentiel de référence VR et la tension au point A, et par suite, l'amplitude VL1 d'une impulsion de lecture IL1, IL2 devient suffisante pour polariser en direct la première diode Da avec un fort courant, c'est-à-dire avec une faible résistance dynamique $Rd_{Da}$.

Il est à noter qu'entre deux impulsions de lecture IL1, IL2 on peut lire d'une manière classique successivement toutes les lignes L1 à L3 de la matrice photosensible, et pour simplifier la représentation de la figure 4, on n'a pas respecté l'échelle des temps. Il faut prévoir la lecture des autres lignes entre l'instant t1 et l'instant t2.Ceci est applicable aux figures 2, 4 et 5. Sur ces figures, l'instant de mise en service de l'intégrateur n'a cependant été représenté que pour une seule ligne.

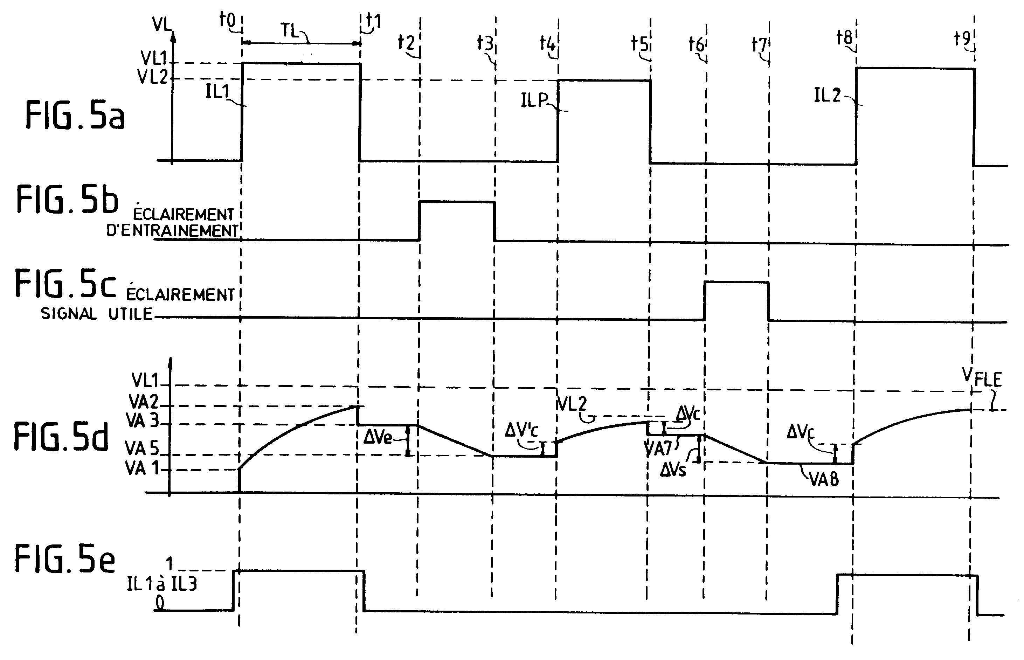

Les figures 5a à 5d sont des diagrammes de signaux explicatifs du procédé de lecture conforme à l'invention, suivant une seconde variante de ce dernier. A la figure 5a, sont représentées des impulsions de lecture IL1, IL2 qui sont appliquées comme précédemment au premier conducteur ligne L1 avec une amplitude VL1 ; et on applique en outre entre deux impulsions de lecture IL1, IL2 une impulsion de lecture partielle ILP ayant une même polarité que les impulsions de lecture mais une amplitude VL2 inférieure à l'amplitude VL1. La figure 5b représente l'éclairement d'entraînement ; la figure 5c représente l'éclairement signal ; la figure 5d montre les valeurs de la tension VA au point A ; la figure 5e illustre l'état ouvert (1) ou fermé (0) de l'interrupteur de remise à zéro I1 à I3 et montre que l'intégration des charges accumulées au point A par un amplificateur G1 à G3 est autorisée pendant la durée d'une impulsion de lecture IL1, IL2.

Comme dans les exemples précédents, l'instant t1 correspond à la fin d'une phase de lecture du cycle précédent c'est-à-dire à la fin d'une impulsion de lecture IL1 qui, à partir de l'instant t0 a duré un temps TL. L'instant t1 marque donc le front descendant de la première impulsion de lecture IL1, et une variation ΔVc de la tension VA au point A qui passe de la valeur VA2 à la valeur VA3. Ainsi l'instant t1 marque la fin de la phase de lecture de tous les points photosensibles du premier conducteur ligne L1. Entre l'instant t1 et un instant t2 on réalise la fin de la lecture de toutes les autres lignes de la matrice (non représentées sur les figures 5a à 5e) ; la valeur VA3 de la tension VA étant conservée jusqu'à l'instant t2. Depuis l'instant t2 jusqu'à l'instant t3, on crée la charge d'entraînement Q0, par exemple pour tous les points photosensibles de la matrice, en envoyant un éclairement d'entraînement pour tout le panneau détecteur. L'éclairement d'entraînement a pour effet, au niveau du premier point photosensible P1 par exemple, de provoquer une variation ΔVe de la tension VA telle que dans l'exemple de la figure 4, cette variation ΔVe conduisant à une diminution de la tension VA qui passe de la valeur VA3 à la valeur VA5.

La tension VA conserve la valeur VA5 jusqu'à un instant t4. A l'instant t4, on envoie une impulsion de lecture partielle ILP d'amplitude VL2, soit simultanément, soit successivement sur tous les conducteurs lignes L1 à L3. Cette impulsion de lecture partielle ILP doit avoir une amplitude VL2 inférieure à l'amplitude VL1 d'une impulsion de lecture IL1, IL2 et être supérieure à la tension VA5, c'est-à-dire à la tension qui existe à l'instant t4 entre le point A et la tension de référence VR. Dans ces conditions, l'impulsion de lecture partielle permet de faire une lecture partielle de la charge d'entraînement Q0 présente au point A, c'est-à-dire d'éliminer une partie de cette charge d'entraînement. Il en résulte qu'après un instant t5 qui marque la fin de l'impulsion de lecture partielle ILP, la tension VA a augmenté et la valeur VA7 de la tension VA qui est obtenue ne dépend plus que de l'amplitude VL2 de l'impulsion de lecture partielle. De sorte qu'il peut être toléré des dispersions spatiales ou temporelles de l'éclairement d'entraînement ; en particulier, les fluctuations temporelles de cet éclairement qui sont au minimum égales à ses fluctuations quantiques sont ainsi éliminées.

Pour terminer les explications relatives à cette dernière version du procédé de l'invention, avec l'application de l'impulsion de lecture partielle ILP, la tension VA accuse une augmentation ΔVc′ qui dépend de l'amplitude VL2 et du rapport de capacité Ca, Cb, la première diode Da étant alors polarisée en inverse ; puis la tension VA augmente et tend vers la valeur VL2 jusqu'à l'instant t5 puis accuse une diminution -

$\Delta$Vc par division capacitive qui lui confère une valeur Va7. La valeur Va7 de la tension VA est conservée jusqu'à l'instant t6 où débute l'éclairement signal qui dure jusqu'à un instant t7. Entre l'instant t6 et l'instant t7, la tension VA diminue par une variation $\Delta$Vs provoquée par l'accumulation de la quantité de charges signal QS au point A. La tension VA a alors une valeur Va8 qu'elle conserve jusqu'à l'instant t8 qui marque le début de la seconde impulsion de lecture IL2. Comme dans les exemples précédents, la tension VA accuse alors une augmentation rapide $\Delta$Vc puis augmente plus lentement pour atteindre une valeur de fin de lecture d'éclairement $V_{FLE}$ à un instant T9 qui marque la fin de la seconde impulsion de lecture IL2. La seconde impulsion de lecture IL2 a permis de faire la lecture de la charge signal QS, à laquelle s'ajoutait une charge d'entraînement résiduelle Q0′ qui correspond à la partie de charge d'entraînement restante, c'est-à-dire non soustraite au point A lors de la lecture partielle entre les instants t4 et t5 par l'impulsion de lecture partielle ILP.

Cette seconde variante du procédé est utilisable si l'éclairement d'entraînement a fait chuter la tension VA, de sorte que la tension VL2 de l'impulsion de lecture partielle ILP soit supérieure à cette tension VA d'une quantité au moins égale à la valeur de sa tension de coude directe.

Il est à remarquer que la mise en oeuvre du procédé de l'invention est d'autant plus intéressante que la seconde diode Db présente en inverse une capacité Cb grande par rapport à la capacité Ca que présente en inverse la première diode Da. En effet généralement, pour un même éclairement, une photodiode ayant une capacité en inverse plus élevée engendre une quantité de charge plus grande : de sorte que quand un point photosensible P1 à P9 est éclairé, l'essentiel des charges est engendré par la seconde diode Db, ce qui se prête particulièrement bien à la production d'une charge d'entrainement Q0 engendrée par un éclairement d'entraînement ; la première diode Da pouvant éventuellement être "aveugle".

## Revendications

1. Procédé de lecture d'au moins un point photosensible (P1 à P9) comportant une première et une seconde diode (Da, Db) montées en série avec des sens de conduction opposés, au moins la seconde diode étant photosensible, ledit procédé consistant à polariser les deux diodes (Da, Db) en inverse pendant l'exposition du point photosensible (P1 à P9) à un signal utile, de sorte à accumuler une quantité de charge signal (QS) en une zone à potentiel flottant (A) située à la liaison des deux diodes (Da, Db), puis à polariser en direct la première diode (Da) pendant des phases de lecture (TL) par des impulsions de lecture (IL) périodiques, ledit procédé étant caractérisé en ce qu'il consiste en outre à éclairer le point photosensible (P1 à P9) par un éclairement additionnel (éclairement d'entraînement) pour engendrer dans la zone à potentiel flottant (A) des charges d'entraînement (Q0) qui s'ajoutent au moins partiellement à la charge signal (QS), afin de réduire la résistance dynamique ($Rd_{Da}$) présentée par la première diode (Da) quand elle est polarisée en direct.

2. Procédé selon la revendication 1, caractérisé en ce qu'il s'applique dans le cas où la seconde diode (Db) est une photodiode qui comporte, quand elle est polarisée en inverse, une capacité (Cb) plus grande qu'une capacité (Ca) présentée par la première diode Da quand cette dernière est polarisée en inverse.

3. Procédé selon la revendication 2, caractérisé en ce que la capacité (Cb) de la seconde diode (Db) est au moins dix fois plus grande que la capacité (Ca) de la première diode (Da).

4. Procédé selon la revendication 1 , caractérisé en ce que l'éclairement additionnel est constitué par une impulsion de lumière.

5. Procédé selon la revendication 1 , caractérisé en ce que l'éclairement additionnel est constitué par une impulsion de lumière appliquée au point photosensible (P1 à P9) entre la fin d'une impulsion de lecture (II) et le début de l'exposition du point photosensible (P1 à P9) à un signal utile.

6. Procédé selon l'une des revendications précédentes, les charges (QS, Q0) engendrées dans la zone à potentiel flottant (A) provoquant dans ladite zone une diminution de la tension (VA) par rapport à un potentiel de référence (VR), caractérisé en ce qu'il consiste à éclairer le point photosensible (P1 à P9) par l'éclairement additionnel (éclairement d'entraînement) de sorte à amener à une valeur donnée (VA5) la tension (VA) de la zone à potentiel flottant (A), puis à appliquer au point photosensible (P1 à P9) une impulsion de tension de lecture partielle (ILP) ayant, par rapport à la tension de référence (VR) une amplitude (VL2) supérieure à ladite valeur donnée (VA5) et inférieure A l'amplitude (VL1) d'une impulsion de lecture (IL).

**Claims**

1. A method of reading at least one photosensitive dot (P1 through P9) comprising a first and a second diode (Da, Db) arranged in series with opposite directions of conduction, at least the second diode being photosensitive, the said method consisting in polarizing the two diodes (Da, Db) inversely during exposure of the photosensitive dot (P1 through P9) to a working signal in such a manner as to accumulate a quantity of signal charge (QS) in a floating potential zone (A) arranged at the connection of the two diodes (Da, Db), then polarizing the first diode (Da) in the forward direction during read phases (TL) using periodic read pulses (IL), the said method being characterized in that it furthermore consists in illuminating the photosensitive dot (P1 through P9) by additional illumination (drive illumination) in order to create, in the floating potential zone (A), drive charges (Q0) which are added at least partly to the signal charge (QS) in order to reduce the dynamic resistance ($Rd_{Da}$) presented by the first diode (Da) when it is polarized in the forward direction.

2. The method as claimed in claim 1, characterized in that it is employed in a case in which the second diode (Db) is a photodiode which comprises, when it is inversely polarized, a capacitance (Cb) which is greater than a capacitance (Ca) presented by the first diode Da, when the latter is inversely polarized.

3. The method as claimed in claim 2, characterized in that the capacitance (Cb) of the second diode (Db) is at least ten times larger than the capacitance (Ca) of the first diode (Da).

4. The method as claimed in claim 1, characterized in that the additional illumination is constituted by a light pulse.

5. The method as claimed in claim 1, characterized in that the additional illumination is constituted by a light pulse applied to the photosensitive dot (P1 through P9) between the end of a read pulse (IL) and the start of the exposure of the photosensitive dot (P1 through P9) to a working signal.

6. The method as claimed in any one of the preceding claims, wherein the charges (QS, Q0) produced in the floating potential zone (A) cause, in the said zone, a reduction in the voltage (VA) in relation to a reference potential (VR), characterized in that the method consists in illuminating the photosensitive dot (P1 through P9) by the additional illumination (drive illumination) in such a manner that the voltage (VA) of the floating potential zone (A) is put at a given potential (VA5), then applying a partial read voltage pulse (ILP) to the photosensitive dot (P1 through P9), said potential having, in relation to the reference voltage (VR), an amplitude (VL2) greater than the said given value (VA5) and less than the amplitude (VL1) of a read pulse (IL).

**Patentansprüche**

1. Verfahren zum Lesen wenigstens eines lichtempfindlichen Punkts (P1 bis P9) mit einer ersten Diode (Da) und einer damit mit entgegengesetzter Durchlaßrichtung in Serie geschalteten zweiten Diode (Db), wobei wenigstens die zweite Diode lichtempfindlich ist, wobei das Verfahren darin besteht, daß die zwei Dioden (Da, Db) in Sperrichtung vorgespannt werden, während der lichtempfindliche Punkt (P1 bis P9) einem Nutzsignal ausgesetzt wird, so daß eine Signalladungsmenge (QS) in einer Zone mit schwimmendem Potential (A), die bei der Verbindung der zwei Dioden (Da, Db) liegt, akkumuliert wird, dann die erste Diode (Da) im Verlauf von Lesephasen (TL) mittels periodischer Leseimpulse (IL) in Durchlaßrichtung vorgespannt wird, wobei das Verfahren dadurch gekennzeichnet ist, daß es ferner darin besteht, den lichtempfindlichen Punkt (P1 bis P9) mit einer zusätzlichen Beleuchtung (Verschiebebeleuchtung) zu beleuchten, um in der Zone (A) mit schwimmendem Potential Verschiebeladungen (Q0) zu erzeugen, die wenigstens zum Teil zur Signalladung (QS) hinzukommen, damit der dynamische Widerstand ($Rd_{Da}$), der von der ersten Diode (Da) gebildet wird, wenn sie in Durchlaßrichtung vorgespannt ist, reduziert wird.

2. Verfahren nach Anspruch 1, dadurch gekennzeichnet, daß es für den Fall angewendet ist, bei dem die zweite Diode (Db) eine Photodiode ist, die bei Vorspannung in Sperrichtung eine Kapazität (Cb) aufweist, die größer als eine von der ersten Diode (Da) gebildete Kapazität (Ca) ist, wenn diese in Sperrichtung vorgespannt ist.

3. Verfahren nach Anspruch 2, dadurch gekennzeichnet, daß die Kapazität (Cb) der zweiten Diode (Db) wenigstens zehnmal so groß wie die Kapazität (Ca) der ersten Diode (Da) ist.

4. Verfahren nach Anspruch 1, dadurch gekennzeichnet, daß die zusätzliche Beleuchtung von einem Lichtimpuls gebildet wird.

5. Verfahren nach Anspruch 1, dadurch gekennzeichnet, daß die zusätzliche Beleuchtung von einem Lichtimpuls gebildet wird, der an den lichtempfindlichen Punkt (P1 bis P9) zwischen dem Ende eines Leseimpulses (IL) und dem Beginn der Beleuchtung des lichtempfindlichen Punkts (P1 bis P9) mit einem Nutzsignal angelegt wird.

6. Verfahren nach einem der vorhergehenden Ansprüche, wobei die in der Zone (A) mit schwimmendem Potential erzeugten Ladungen (QS, Q0) in dieser Zone eine Reduzierung der Spannung (VA) bezüglich eines Referenzpotentials (VR) hervorrufen, dadurch gekennzeichnet, daß es darin besteht, den lichtempfindlichen Punkt (P1 bis P9) durch eine zusätzliche Beleuchtung (Verschiebebeleuchtung) zu beleuchten, so daß ein gegebener Spannungswert (VA5) der Spannung (VA) der Zone (A) mit schwimmendem Potential herbeigeführt wird, dann an den lichtempfindlichen Punkt (P1 bis P9) ein Teillese-Spannungsimpuls (ILP) angelegt wird, der bezüglich der Referenz-Spannung (VR) eine Amplitude (VL2) hat, die größer als der gegebene Wert (VA5) und kleiner als die Amplitude (VL1) eines Leseimpulses (IL) ist.

FIG.1

EP 0 364 314 B1

FIG.2a

FIG.2b
SIGNAL UTILE
D'ECLAIREMENT

FIG.2c

FIG.2d

$t0$ $TL$ $t1$ $t2$ $t3$ $t4$ $t5$

$VL$
$+VL1$
$IL1$
$IL2$
$VR$

$VA$
$VL1$
$VA2$
$VA3$
$\Delta VC$
$V_{DLO}$
$V_{FLO}$
$\Delta VC$
$\Delta VS$
$0$
$E$
$VA1$
$VA4$
$\Delta VC$
$\Delta VC$
$V_{DLE}$
$V_{FLE}$
$VR$

$1$
$I1$ à $I3$
$0$

# FIG. 3

FIG. 4a — IMPULSIONS LECTURE

FIG. 4b — ÉCLAIREMENT D'ENTRAINEMENT

FIG. 4c — ÉCLAIREMENT SIGNAL UTILE

FIG. 4d

FIG. 4e — IL1 à IL3

EP 0 364 314 B1

FIG.5a

FIG.5b ÉCLAIREMENT D'ENTRAINEMENT

FIG.5c ÉCLAIREMENT SIGNAL UTILE

FIG.5d

FIG.5e

EP 0 364 314 B1